# EUROPÄISCHE PATENTSCHRIFT

(11) **EP 1 226 047 B1**
(45) Veröffentlichungstag und Bekanntmachung des Hinweises auf die Patenterteilung: **05.01.2005**
(21) Anmeldenummer: 01965213.0
(22) Anmeldetag: 24.08.2001
(51) Int. Cl.: B60N 2/04, B60N 2/02

(54) **VERSTELLVORRICHTUNG FÜR EINEN FAHRZEUGSITZ**
ADJUSTING DEVICE FOR A VEHICLE SEAT
DISPOSITIF DE REGLAGE D'UN SIEGE DE VEHICULE

(30) Priorität: 01.09.2000 DE 20015115 U
(43) Veröffentlichungstag der Anmeldung: 31.07.2002
(73) Patentinhaber: Johnson Controls GmbH, 51399 Burscheid (DE)
(72) Erfinder: JAEGER, David, 50939 Köln (DE); XIROMERITIS, Nick, Southfield, MI 48034 (US); KARACSONYI, Tamas, 42289 Wuppertal (DE); CLARK, Marc, 51399 Burscheid (DE)
(74) Vertreter: Kutzenberger, Helga, Dr.
(86) Internationale Anmeldenummer: PCT/EP2001/009777
(87) Internationale Veröffentlichungsnummer: WO 2002/018170

(56) Entgegenhaltungen:
- DE-A- 4 326 122
- US-A- 3 037 735
- US-A- 3 711 153
- US-A- 5 358 308

## Beschreibung

Die Erfindung betrifft eine Vorrichtung zum Verstellen der Höhen- und Längsposition sowie der Neigung eines Fahrzeugsitzes relativ zu einem Fahrzeugboden, wobei der Fahrzeugsitz zwei in einer Verstellrichtung voneinander beabstandete Schwenkhebel aufweist, die über parallel zueinander verlaufende Schwenkachsen jeweils am Fahrzeugsitz und am Fahrzeugboden angelenkt sind.

Desweiteren betrifft die Erfindung einen Fahrzeugsitz mit einer derartigen Vorrichtung.

Um verschiedenen Benutzern eines Fahrzeugsitzes, insbesondere den Fahrzeugführern eines Kraftfahrzeugs, jeweils eine optimale Sitzposition zu ermöglichen, ist das Verstellen der Höhen- und Längsposition sowie der Neigung des Fahrzeugsitzes relativ zum Fahrzeugboden unerläßlich.

In einem Fahrzeugkoordinatensystem ist eine Kurve spezifisch für jedes Fahrzeug definiert, auf der sich der mensch- und sitzbezogene, sogenannte Hüftpunkt bewegen darf, damit optimale Bedingungen hinsichtlich Erfassen des Lenkrades, Erreichen der Schalter, Bedienung der Fußpedale, Sicht aus den Fenstern und anderes mehr gewährleistet sind. Als Hüftpunkt wird das Hüftgelenk bezeichnet, das aus dem Lager des Oberschenkelknochens im Beckenknochen gebildet wird. Der Hüftpunkt bildet somit den Punkt, der die Position des Fahrzeuginsassen im Fahrzeugkoordinatensystem bestimmt, wenn er auf dem Fahrzeugsitz platzgenommen hat. Hüftpunkt und Fahrzeugsitz sind im Zusammenhang zu sehen, und für die Entwicklung einer Sitzverstellvorrichtung maßgebend. Beispielsweise sinkt auf einem weichem Sitzpolster ein schwerer Mensch tiefer als ein leichter Mensch ein, bzw. führen verschiedene Härtegrade der Polster zu unterschiedlichen Einsinktiefen desselben Benutzers.

Der Hüftpunkt des Fahrzeuglenkers sollte sich stets auf der relativ zum Fahrzeugkoordinatensystem angeordneten Kurve (Hüftpunktweg) bewegen. Diese Kurve stellt den Weg des Hüftpunktes von im Kraftfahrzeugbau gebräuchlichen Normmenschen, sogenannten Perzentilen, dar, wenn diese optimal im Fahrzeug positioniert sind. Hierbei ist festzustellen, daß der Hüftpunkt beispielsweise einer kleinen Frau (5%-Frau-Perzentil) in Blickrichtung (meist gleichzeitig Fahrtrichtung) der Frau vorne oben und der Hüftpunkt eines großen Mannes (95%-Mann-Perzentil) hingegen hinten unten positioniert werden muß. Eine Vielzahl abweichender Hüftpunktwege erzeugt ein sogenanntes Hüftpunktfeld (H-Punktfeld), das um den Hüftpunktweg der Normmenschen angeordnet ist.

Zusätzlich zu den unterschiedlichen Größen der Menschen ergibt sich, da jeder Mensch von unterschiedlicher Gestalt ist, in Bezug auf die vorgenannten Normmenschen eine grobe Einteilung in sogenannte Sitzriesen und Sitzzwerge. Sitzriesen weisen einen großen Oberbau mit kurzen Beinen, Sitzzwerge dagegen einen kurzen Oberkörper mit langen Beinen auf. Somit ergibt sich bei den meisten Personen zwangsläufig eine Abweichung vom Hüftpunktweg des Normmenschen.

Aus der Notwendigkeit, den Hüftpunkt stets im H-Punktfeld zu positionieren, sind Sitzverstellvorrichtungen erforderlich, wie sie beispielsweise in den Veröffentlichungen DE 32 22 386 A1, DE 40 10 451 C2 und EP 0 445 528 A2 offenbart sind.

Die DE 32 22 386 A1 zeigt eine Verstellvorrichtung, bei der die Höhenverstellung mittels einer schiefen Ebene realisiert wird. In Kombination mit der schiefen Ebene kann mit der durch diese getragenen Längsverstelleinrichtung der Sitz entsprechend positioniert werden.

In der DE 40 10 451 C2 und der EP 0 445 528 A2 sind dagegen für die Verstellung der Sitzposition Verstellvorrichtungen vorgesehen, die aus einem Parallelogrammgetriebe und einer zwischen dem Sitzuntergestell und dem Fahrzeugboden angeordneten Verschiebevorrichtung für die Längsverstellung gebildet sind.

Bei den oben dargestellten Verstellvorrichtungen wird die Verstellung der Längsposition des Fahrzeugsitzes relativ zum Fahrzeugboden mit Hilfe eines Führungsschienenpaares mit allen bekannten Nachteilen wie Raumbedarf und Verkantungsanfälligkeit usw. bewerkstelligt.

Die DE 197 42 773 A1 offenbart einen variablen, ohne ein Längsschienenpaar auskommenden Sitz für Verkehrssysteme, der bevorzugt in Flugzeugen und Bahnen einsetzbar ist. Zur Ausrüstung von Kraftfahrzeugen weist der Sitz jedoch erhebliche Nachteile auf, die eine vorteilhafte Anwendung ausschließen. So muß, um den Sitz in die gewünschte Position zu bringen, eine zentrale Sperrvorrichtung entriegelt werden, wodurch sämtliche Gelenke frei beweglich werden und somit der Sitz, ähnlich einem Liegestuhl, zunächst unkontrollierbar um seine Gelenkachsen schwenkbar ist. Dies bedeutet, dass im Falle einer Fehlbedienung oder bei einem Frontal- oder Heckstoß auf das Fahrzeug der Insasse bei entriegeltem Sitz ohne Halt ist.

Außerdem offenbart die (US-A-3 037 735 eine Sitzanordnung für ein Fahrzeug, wobei sowohl im vorderen als auch im hinteren Bereich des Sitzes zweiteilige Hebel angeordnet sind, die jeweils ein Kniegelenk aufweisen, dessen Stellung über die jeweilige Spindelverstellung einstellbar ist und wobei die oberen Teile der Hebel ausgehend von der Einstellung der Kniegelenke jeweils ein Viergelenk bilden, welches von einem dritten Spindelantrieb eingestellt wird.

Der Erfindung liegt die Aufgabe zugrunde, eine Einrichtung oder einen Fahrzeugsitz mit einer derartigen Einrichtung zum Verstellen der Höhen- und Längsposition sowie der Neigung eines Fahrzeugsitzes relativ zum Fahrzeugboden zu schaffen, die eine Verstellung des Fahrzeugsitzes ohne die Verwendung von Längsführungsschienen ermöglicht. Insbesondere soll die Positionierung des Hüftpunktes auf einer Strecke von mindestens 200 mm (Hüftpunktweg) sowie bei von Normmaßen abweichenden Personen eine Korrektur der Position des Hüftpunktes innerhalb des fahrzeugspezifischen H-Punktfeldes möglich sein. Die Verstelleinrichtung soll mit Fahrzeugsitzen, die werkzeuglos mittels spezieller, bekannter Verankerungseinrichtungen in das Fahrzeug ein- bzw. aus dem Fahrzeug ausgebaut werden können, verwendbar sein.

Erfindungsgemäß wird dies durch die Merkmale des Anspruchs 1 erreicht, wobei, insbesondere die am Fahrzeugsitz und am Fahrzeugboden angeordneten Schwenkachsen eines Schwenkhebels unabhängig voneinander arretierbar sind und der die arretierbaren Schwenkachsen aufweisende Schwenkhebel eine zusätzliche, parallel zu den Schwenkachsen verlaufende Schwenkachse aufweist.

Vorteilhafterweise sind an einem Fahrzeugsitz vier Schwenkhebel, jeweils ein Schwenkhebel an einer der vier Ecken des Fahrzeugsitzes, angeordnet (sogenanntes Viergelenkgetriebe). Die in Blickrichtung (die in der Regel auch der Fahrtrichtung entspricht) des auf dem Fahrzeugsitz sitzenden Benutzers hinteren Schwenkhebel weisen jeweils eine zusätzliche, parallel zu den Schwenkachsen verlaufende Schwenkachse auf, so dass sie in jeweils zwei gelenkig verbundene Teilhebel unterteilt sind. Aufgrund der wahlweisen Arretierung einer Schwenkachse ist der Fahrzeugsitz jeweils auf Basis eines Viergelenkgetriebes über die nicht arretierten Schwenkachsen schwenkbar. Diese erfindungsgemäße Einrichtung auf Basis zweier sich überlagernder Viergelenkgetriebe bzw. eines "Fünfgelenks" ermöglicht eine Einstellbarkeit des Fahrzeugsitzes in einer Vielzahl unterschiedlicher Positionen. Die arretierbaren Schwenkachsen sind vorteilhafterweise angetrieben, wobei die Antriebsvorrichtungen gleichzeitig die Arretierung gewährleisten. Die vorteilhafte Bauweise des Verstellmechanismusses erlaubt weiterhin, dass das gesamte Verstellsystem in einer Art Kasten unterhalb des Fahrzeugbodens eingebaut werden kann, so dass lediglich die Schwenkhebelpaare im vorderen und hinteren Sitzbereich teilweise sichtbar sind.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll im folgenden die Erfindung genauer erläutert werden. Es zeigen:
- Fig. 1: eine Prinzipdarstellung einer erfindungsgemäßen Vorrichtung in Seitenansicht in beispielsweise der in Fahrtrichtung vorderen Position des Fahrzeugsitzes,
- Fig. 2: eine Prinzipdarstellung der in Fig. 1 dargestellten erfindungsgemäßen Vorrichtung in Seitenansicht in der in Fahrtrichtung hinteren Position des Fahrzeugsitzes,
- Fig. 3: eine Prinzipdarstellung der in Fig. 1 dargestellten erfindungsgemäßen Vorrichtung in Seitenansicht in erhöhter und in einer Fahrtrichtung hinteren Position des Fahrzeugsitzes.

In den verschiedenen Figuren der Zeichnung sind gleiche Teile stets mit denselben Bezugszeichen versehen.

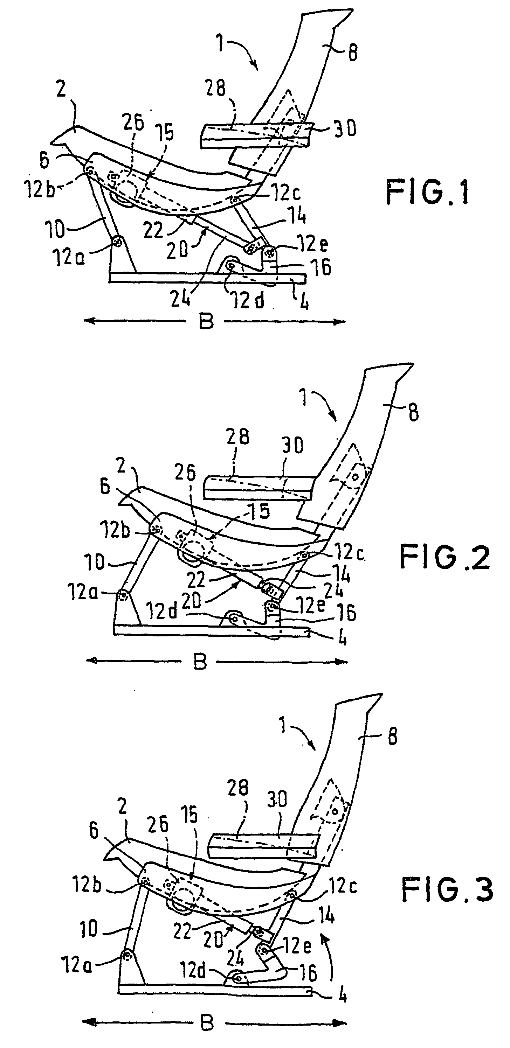

Die Fig. 1 bis 3 verdeutlichen die Funktionsweise einer erfindungsgemäßen Vorrichtung. Ein Fahrzeugsitz 1 besteht aus einem Sitzpolster 2, einer stabilen, einem Fahrzeugboden 4 zugewandten Sitzschale 6 und vorzugsweise einer Rückenlehne 8. Der Fahrzeugsitz 1 weist einen ersten mit dem Fahrzeugboden verbundenen Schwenkhebel 10 und einen in einer Verstellrichtung B von diesem beabstandeten zweiten mit dem Fahrzeugboden verbundenen Schwenkhebel 14 auf. Die Schwenkhebel 10, 14 sind jeweils über parallel verlaufende Schwenkachsen 12 a, 12 b, 12 c, 12 d mit parallel zueinander verlaufenden Schwenkachsen am Fahrzeugsitz 1 und am Fahrzeugboden 4 angelenkt.

Vorteilhafterweise können auch jeweils zwei Schwenkhebel 10, 14 einander gegenüberliegend in Eckbereichen des Sitzpolsters 6 angeordnet sein.

Einer der Schwenkhebel 10, 14, beispielsweise der zweite Schwenkhebel 14, weist erfindungsgemäß eine zusätzliche, parallel zu den Schwenkachsen 12 a, 12 b, 12 c, 12 d verlaufende Schwenkachse 12 e auf, so dass er in zwei Hebelabschnitte (14, 16) unterteilt ist. Somit ergibt sich ein Zwischenhebel 16, der einerseits über die Schwenkachse 12 e mit dem Schwenkhebel 14 und andererseits über die Schwenkachse 12 d mit dem Fahrzeugboden 4 verbunden ist. Der Zwischenhebel 16 ist vorzugsweise als v-förmiger Winkelhebel ausgeführt, wobei die Winkelöffnung des Winkelhebels etwa in Richtung des ersten Schwenkhebels 10 weist. Die am Fahrzeugsitz 4 angeordnete Schwenkachse 12 c und die am Fahrzeugboden angeordnete Schwenkachse 12 d des zweiten Schwenkhebels 14 bzw. des Zwischenhebels 16 sind erfindungsgemäß jeweils unabhängig voneinander arretierbar. Aufgrund der wahlweisen Arretierung einer dieser Schwenkachsen 12 c, 12 d ist der Fahrzeugsitz 1 jeweils auf Basis eines Viergelenkgetriebes über die nicht arretierten Schwenkachsen 12 a, 12 b, 12 c, 12 e bzw. 12 a, 12 b, 12 d, 12 e schwenkbar. Das Schwenken beider Viergelenkgetriebe bewirkt jeweils sowohl eine Höhen- und eine Längsverstellung, wobei sich die Verstellkurven der beiden einstellbaren Viergelenkgetriebe überlagern und somit eine Vielzahl unterschiedlicher Positionen des Fahrzeugsitzes 1 einstellbar ist.

Die Schwenkachse 12 d weist vorteilhafterweise eine nicht dargestellte Antriebsvorrichtung für die Schwenkbewegung auf. Der Antrieb und die Arretierung können beispielsweise über einen selbstgehemmten Elektromotor, mittels eines handbetriebenem Schrittschaltwerks oder einem anderen geeigneten Antriebsmittel kombiniert werden.

Zur Arretierung des Schwenklagers 12 c und zur Verstellung des Fahrzeugsitzes 1 bzw. der Sitzschale 6 in die gewünschten Positionen, ist ein weiterer arretierbarer Antriebsmechanismus 15 einendig etwa in der Nähe der Schwenkachse 12 b des ersten Schwenkhebels 10 an der Sitzschale 6 befestigt und anderendig zwischen den Schwenkachsen 12 c und 12 e an dem zweiten Schwenkhebel 14 angelenkt. Als Antriebsmechanismus hat sich ein elektromotorisch betätigter Spindel-Mutter-Trieb 20, bestehend aus einer Mutter, einer Spindel 24 und einem Antrieb 26, als zweckmäßig erwiesen. Dabei ist eine teleskopartige Ausbildung des Spindel-Mutter-Triebs 20, bei der die Spindel 24 in ein Muttergehäuse 22 ein- bzw. aus diesem teilweise herausschraubbar ist, aus Platzgründen besonders vorteilhaft. Bei einer paarweisen Anordnung der Schwenkhebel 10, 14 kann der Spindel-Mutter-Trieb 20 mittig der Sitzschale 6 angeordnet und über nicht dargestellte Querachsen mit dem zweiten Schwenkhebelpaar 14 verbunden sein. Denkbar ist auch die Verwendung zweier oder mehrerer Antriebsvorrichtungen, wobei dann für Synchronlauf gesorgt werden muß.

In Fig. 1 ist die Position des Fahrzeugsitzes 1 bei vollständig ausgefahrener Spindel 24 des Spindel-Mutter-Triebes 20 dargestellt. Erfindungsgemäß ist in dieser Position der v-förmige Zwischenhebel 16 derart positioniert, daß die Schwenkachse 12 e einen geringen Abstand zum Fahrzeugboden 4 aufweist, die Schwenklager 12 d und 12 e also in Richtung der Verstellrichtung B nahezu maximal voneinander beabstandet sind. Wird aus dieser Position die Spindel 24 des Spindel-Mutter-Triebes 20 bei arretierter Schwenkachse 12 d in das Muttergehäuse 22 eingeschraubt, so wird der Fahrzeugsitz über die Schwenkgelenke 12 a, 12b, 12 c und 12 e entlang der Verstellrichtung B in eine hintere Position gemäß Fig. 2 bewegt. Dagegen bewirkt ein Ausfahren der Spindel 24 bei arretiertem Schwenkgelenk 12 d beispielsweise aus der in Fig. 2 dargestellten Position entsprechend eine entgegengesetzte Bewegung des Fahrzeugsitzes 1. Über die den Schwenkhebeln 10, 14 zugeordneten Kreisbahnen wird dabei der Fahrzeugsitz 1 während der Längsbewegung gleichzeitig, in Abhängigkeit der Position der Schwenkhebel 10, 14, in geringem Maße höhenverstellt.

Fig. 3 verdeutlicht die Verstellung des Fahrzeugsitzes 1 aufgrund einer Schwenkbewegung der angetriebenen Schwenkachse 12 d bei arretierter Schwenkachse 12 c. Aufgrund des in der Ausgangsposition gemäß Fig. 2 geringen Abstands der Schwenkachse 12 e vom Fahrzeugboden 4 erfolgt durch Schwenken der Schwenkachse 12 d in erster Linie eine Höhenverstellung des Fahrzeugsitzes 1, da sich der Abstand der Schwenkachse 12 e vom Fahrzeugboden 4 stark vergrößert, während die mit dieser Schwenkbewegung verbundene Längsbewegung des Fahrzeugsitzes 1 gering ist.

Die in Fig. 3 dargestellte Position des Fahrzeugsitzes 1 ist beispielsweise für eine kleine Frau (5%-Frau-Perzentil) erforderlich, die in Fig. 1 dargestellte Position dagegen für die Sitzposition eines großen Mannes (95%-Mann-Perzentil). Zwischenpositionen für sogenannte Sitzzwerge bzw. Sitzriesen lassen sich mit Hilfe des Zwischenhebelpaares 16 problemlos einstellen.

Der ebenfalls in den Fig. 1 bis 3 eingezeichnete Hüftpunktweg 28 und das sich aus den Verstellmöglichkeiten des Fahrzeugsitzes 1 ergebende Hüftpunktfeld 30 verdeutlichen weiterhin die Vielzahl der sich aus der Überlagerung der Vierpunktgetriebe möglichen einstellbaren Sitzpositionen.

Die erfindungsgmäße Vorrichtung zur Verstellung der Sitzposition ist für eine Kopplung mit einer Verstellvorrichtung für die Rückenlehne 8 geeignet. Beispielsweise kann zur Einstellung der Neigung der Rückenlehne 8 ein elektromotorischer Antrieb vorgesehen sein, der durch einen zusätzlichen geeigneten Hebelmechanismus mit dem Verstellmechanismus der Sitzschale 6 gekoppelt wäre. Es ist aber auch eine vollkommen unabhängige, handbetätigte Einstellung der Neigung der Rückenlehne möglich.

Die erfindungsgemäße Vorrichtung ermöglicht ein einfaches und bequemes Verstellen der Höhen- und Längsposition sowie der Neigung des Fahrzeugsitzes 1 relativ zum Fahrzeugboden 6. Auf die Verwendung von Längsführungsschienen kann verzichtet werden. Die erfindungsgemäße Vorrichtung ist mit Fahrzeugsitzen, die werkzeuglos mittels spezieller, bekannter Verankerungseinrichtungen in das Fahrzeug ein- bzw. aus dem Fahrzeug ausgebaut werden können, verwendbar.

## Patentansprüche

1. Vorrichtung zum Verstellen der Höhen- und Längsposition sowie der Neigung eines Fahrzeugsitzes (1) relativ zu einem Fahrzeugboden (4), wobei die Vorrichtung mindestens zwei in einer Verstellrichtung (B) voneinander beabstandete Schwenkhebel (10, 14) aufweist, die über parallel zueinander verlaufende Schwenkachsen (12 a, 12 b, 12 c, 12 d) jeweils am Fahrzeugsitz (1) und am Fahrzeugboden (4) angelenkt sind, wobei
die am Fahrzeugsitz (1) und am Fahrzeugboden (4) angeordneten Schwenkachsen (12 a, 12 b; 12 c, 12 d) wenigstens eines (14) der Schwenkhebel (10, 14) unabhängig voneinander arretierbar sind, wobei der die arretierbaren Schwenkachsen (12 c, 12 d) aufweisende Schwenkhebel (14) eine zusätzliche, parallel zu den Schwenkachsen (12 a, 12 b, 12 c, 12 d) verlaufende Schwenkachse (12 e) aufweist.

2. Vorrichtung nach Anspruch 1,
**dadurch gekennzeichnet,**
**daß** ein zwischen der zusätzlichen Schwenkachse (12 e) und dem Fahrzeugboden (4) angeordneter Zwischenhebel (16) v-förmig ausgeformt ist, wobei dessen Winkelöffnung etwa in Richtung des anderen Schwenkhebels (10) weist.

3. Vorrichtung nach Anspuch 1 oder Anspruch 2,
**dadurch gekennzeichnet,**
**daß** die am Fahrzeugsitz (4) angeordnete arretierbare Schwenkachse (12 c) mit Hilfe einer Antriebsvorrichtung (15) angetrieben wird, wobei die Arretierung dieser Schwenkachse (12 c) ebenfalls über die Antriebsvorrichtung (15) erfolgt.

4. Vorrichtung nach Anspruch 3,
**dadurch gekennzeichnet,**
**dass** die Antriebsvorrichtung (15) als elektromotorisch angetriebener teleskopischer Spindel-Mutter-Trieb (20) ausgeführt ist, der einendig zwischen der zusätzlichen Schwenkachse (12 e) und dem Fahrzeugsitz (1) an dem die zusätzliche Schwenkachse (12 e) aufweisenden Schwenkhebel (14) angelenkt und anderendig etwa in der Nähe der am Fahrzeugsitz (1) angeordneten Schwenkachse (12 b) des anderen Schwenkhebels (10) befestigt ist.

5. Vorrichtung nach einem der Ansprüche 1 bis 4;
**dadurch gekennzeichnet,**
**daß** die am Fahrzeugboden (4) angeordnete arretierbare Schwenkachse (12d) elektromotorisch antreibbar ist.

6. Vorrichtung nach einem der Ansprüche 1 bis 4,
**dadurch gekennzeichnet,**
**daß** die am Fahrzeugboden (4) angeordnete arretierbare Schwenkachse (12d) mittels eines handbetriebenen Schrittschaltwerks antreibbar ist.

7. Vorrichtung nach einem der Ansprüche 1 bis 6,
**dadurch gekennzeichnet,**
**daß** der Abstand der am Zwischenhebel (16) angeordneten Schwenklager (12 e; 12 d) einen geringeren Abstand zueinander aufweisen als die jeweils an einem der Schwenkhebel (10, 14) angeordneten Schwenklager (12 a, 12 b; 12 c, 12 d).

8. Vorrichtung nach einem der Ansprüche 1 bis 7,
**dadurch gekennzeichnet,**
**daß** die Schwenkhebel (10, 14) derart verstellbar sind, daß der Fahrzeugsitz (1) in der Verstellrichtung (B) um mindestens 200 mm Länge bewegbar ist.

9. Vorrichtung nach einem der Ansprüche 1 bis 8,
**dadurch gekennzeichnet, daß** die Schwenkhebel (10, 14) eine derartige Länge aufweisen, daß der Fahrzeugsitz (1) in Verstellrichtung (B) eine ansteigende bzw. in die andere Richtung eine abfallende Bewegung ausführt.

10. Fahrzeugsitz (1) mit einer Vorrichtung zum Verstellen der Höhen- und Längsposition sowie der Neigung eines Fahrzeugsitzes (1) relativ zu einem Fahrzeugboden (4), wobei die Vorrichtung zwei in einer Verstellrichtung (B) voneinander beabstandete Schwenkhebel (10, 14) aufweist, die über parallel zueinander verlaufende Schwenkachsen (12 a, 12 b, 12 c, 12 d) jeweils am Fahrzeugsitz (1) und am Fahrzeugboden (4) angelenkt sind,
**gekennzeichnet durch**
die Merkmale eines oder mehrerer der Ansprüche 1 bis 9.

11. Fahrzeugsitz nach Anspruch 10,
**gekennzeichnet durch**,
eine an dem Fahrzeugsitz (1) schwenkbar gelagerte Rückenlehne (8).

## Claims

1. Device for adjusting the vertical and longitudinal position and the inclination of a vehicle seat (1) relative to a vehicle floor (4), the device having at least two swivel levers (10, 14) which are spaced apart from each other in an adjustment direction (B) and are coupled in each case to the vehicle seat (1) and to the vehicle floor (4) via swivel axles (12a, 12b, 12c, 12d) running parallel to one another, the swivel axles (12a, 12b; 12c, 12d) of at least one (14) of the swivel levers (10, 14), which swivel axles are arranged on the vehicle seat (1) and on the vehicle floor (4), being lockable independently of one another, the swivel lever (14) having the lockable swivel axles (12c, 12d) having an additional swivel axle (12e) running parallel to the swivel axles (12a, 12b, 12c, 12d).

2. Device according to Claim 1, **characterized in that** an intermediate lever (16) which is arranged between the additional swivel axle (12e) and the vehicle floor (4) is of v-shaped formation, with its angle opening pointing approximately in the direction of the other swivel lever (10).

3. Device according to Claim 1 or Claim 2, **characterized in that** the lockable swivel axle (12c) which is arranged on the vehicle seat (4) is driven with the aid of a driving device (15), the locking of this swivel axle (12c) taking place likewise via the driving device (15).

4. Device according to Claim 3, **characterized in that** the driving device (15) is designed as a telescopic spindle/nut drive (20) which is driven by electric motor, is coupled at one end between the additional swivel axle (12e) and the vehicle seat (1) to the swivel lever (14) having the additional swivel axle (12e) and is fastened at the other end approximately in the vicinity of the swivel axle (12b) of the other swivel lever (10), which swivel axle is arranged on the vehicle seat (1).

5. Device according to one of Claims 1 to 4, **characterized in that** the lockable swivel axle (12d) which is arranged on the vehicle floor (4) can be driven by electric motor.

6. Device according to one of Claims 1 to 4, **characterized in that** the lockable swivel axle (12d) which is arranged on the vehicle floor (4) can be driven by means of a manually operated step-by-step mechanism.

7. Device according to one of Claims 1 to 6, **characterized in that** the swivel bearings (12e; 12d) which are arranged on the intermediate lever (16) are at a smaller distance from each other than the swivel bearings (12a, 12b; 12c, 12d) arranged in each case on one of the swivel levers (10, 14).

8. Device according to one of Claims 1 to 7, **characterized in that** the swivel levers (10, 14) can be adjusted in such a manner that the vehicle seat (1) can be moved by at least 200 mm in length in the adjustment direction (B).

9. Device according to one of Claims 1 to 8, **characterized in that** the swivel levers (10, 14) are of such a length that the vehicle seat (1) executes a rising movement in the adjustment direction (B) and a dropping movement in the other direction.

10. Vehicle seat (1) having a device for adjusting the vertical and longitudinal position and the inclination of a vehicle seat (1) relative to a vehicle floor (4), the device having two swivel levers (10, 14) which are spaced apart from each other in an adjustment direction (B) and are coupled in each case to the vehicle seat (1) and to the vehicle floor (4) via swivel axles (12a, 12b, 12c, 12d) running parallel to one another, **characterized by** the features of one or more of Claims 1 to 9.

11. Vehicle seat according to Claim 10, **characterized by** a backrest (8) mounted on the vehicle seat (1) in a manner such that it can swivel.

## Revendications

1. Dispositif de réglage de la position en hauteur et en longueur ainsi que de l'inclinaison d'un siège de véhicule (1) par rapport à un sol du véhicule (4), dans lequel le dispositif présente au moins deux leviers pivotants (10, 14) espacés l'un de l'autre dans une direction de réglage (B), lesquels sont articulés par le biais d'axes de pivotement (12a, 12b, 12c, 12d) s'étendant parallèlement, respectivement au siège de véhicule (1) et au sol du véhicule (4),
les axes de pivotement (12a, 12b, 12c, 12d) d'au moins l'un (14) des leviers pivotants (10, 14) disposés sur le siège de véhicule (1) et sur le sol du véhicule (4) pouvant être bloqués indépendamment les uns des autres, le levier pivotant (14) présentant les axes de pivotement pouvant être bloqués (12c, 12d) présentant un axe de pivotement (12e) supplémentaire s'étendant parallèlement aux axes de pivotement (12a, 12b, 12c, 12d).

2. Dispositif selon la revendication 1,
**caractérisé en ce qu'**un levier intermédiaire (16) disposé entre l'axe de pivotement supplémentaire (12e) et le sol du véhicule (4) est formé en forme de V, son ouverture angulaire étant tournée approximativement dans la direction de l'autre levier pivotant (10).

3. Dispositif selon la revendication 1 ou la revendication 2,
**caractérisé en ce que** l'axe de pivotement (12c) pouvant être bloqué, disposé sur le siège du véhicule (1), est entraîné à l'aide d'un dispositif d'entraînement (15), le blocage de cet axe de pivotement (12c) s'effectuant également par l'intermédiaire du dispositif d'entraînement (15).

4. Dispositif selon la revendication 3,
**caractérisé en ce que**
le dispositif d'entraînement (15) est réalisé sous forme de mécanisme à broche et écrou (20) télescopique entraîné par un moteur électrique, qui est articulé à une extrémité entre l'axe de pivotement supplémentaire (12e) et le siège du véhicule (1) sur le levier pivotant (14) présentant l'axe de pivotement supplémentaire (12e) et est fixé à l'autre extrémité approximativement à proximité de l'axe de pivotement (12b) de l'autre levier pivotant (10), disposé sur le siège du véhicule (1).

5. Dispositif selon l'une quelconque des revendications 1 à 4,
**caractérisé en ce que**
l'axe de pivotement (12d) pouvant être bloqué, disposé sur le sol du véhicule (4), peut être entraîné par un moteur électrique.

6. Dispositif selon l'une quelconque des revendications 1 à 4,
**caractérisé en ce que**
l'axe de pivotement (12d) pouvant être bloqué, disposé sur le sol du véhicule (4), peut être entraîné au moyen d'un mécanisme de commutation pas à pas actionné à la main.

7. Dispositif selon l'une quelconque des revendications 1 à 6,
**caractérisé en ce que**
les distances des paliers pivotants (12e, 12d) disposés sur le levier intermédiaire (16) présentent les unes par rapport aux autres une distance inférieure aux paliers pivotants (12a, 12b, 12c, 12d) disposés respectivement sur l'un des leviers pivotants (10, 14).

8. Dispositif selon l'une quelconque des revendications 1 à 7,
**caractérisé en ce que**
les leviers pivotants (10, 14) sont réglables de telle manière que le siège du véhicule (1) puisse être déplacé d'au moins 200 mm dans la direction de réglage (B).

9. Dispositif selon l'une quelconque des revendications 1 à 8,
**caractérisé en ce que**
les leviers pivotants (10, 14) présentent une longueur telle que le siège du véhicule (1) effectue dans la direction de réglage (B) un mouvement montant, ou bien descendant dans l'autre direction.

10. Siège de véhicule (1) comprenant un dispositif de réglage de la position en hauteur et en longueur ainsi que de l'inclinaison d'un siège du véhicule (1) par rapport à un sol du véhicule (4), le dispositif présentant deux leviers pivotants (10, 14) espacés l'un de l'autre dans une direction de réglage (B), qui sont articulés par le biais d'axes de pivotement parallèles (12a, 12b, 12c, 12d) respectivement au siège du véhicule (1) et au sol du véhicule (4),
**caractérisé par**
les caractéristiques d'une ou de plusieurs des revendications 1 à 9.

11. Siège de véhicule selon la revendication 10,
**caractérisé par**
un dossier (8) monté de manière à pouvoir pivoter sur le siège du véhicule (1).
